# EUROPÄISCHE PATENTSCHRIFT

(11) **EP 0 796 495 B1**
(45) Veröffentlichungstag und Bekanntmachung des Hinweises auf die Patenterteilung: **12.08.1998**
(21) Anmeldenummer: 95943157.8
(22) Anmeldetag: 08.12.1995
(51) Int. Cl.: G21C 7/12

(54) **SYSTEM UND VERFAHREN ZUR STEUERUNG VON STEUERSTÄBEN EINER KERNKRAFTANLAGE**
SYSTEM AND PROCESS FOR CONTROLLING CONTROL RODS IN A NUCLEAR POWER PLANT
PROCEDE ET SYSTEME DE COMMANDE DE BARRES DE COMMANDE D'UNE CENTRALE NUCLEAIRE

(30) Priorität: 08.12.1994 DE 4443746
(43) Veröffentlichungstag der Anmeldung: 24.09.1997
(73) Patentinhaber: SIEMENS AKTIENGESELLSCHAFT, 80333 München (DE)
(72) Erfinder: RAUCH, Godehard, D-63110 Rodgau (DE); SCHULZE, Joachim, D-60598 Frankfurt am Main (DE)
(86) Internationale Anmeldenummer: DE9501762
(87) Internationale Veröffentlichungsnummer: WO9618195

(56) Entgegenhaltungen:
- EP-A- 0 326 267
- US-A- 4 717 528
- US-A- 5 217 678

## Beschreibung

Die Erfindung betrifft ein System zur Steuerung von Steuerstäben, die in den Reaktorkern einer Kernkraftanlage, insbesondere mit einem Siedewasserreaktor ein- und ausfahrbar sind, welches eine Anwahleinrichtung und eine Stabsteuereinrichtung hat, wobei die Anwahleinrichtung, die zur Regelung der Kernkraftanlage definierten und auswählbaren Fahrfolgen, d.h. Zuordnung und Bewegungsabfolge der Steuerstäbe für jeden vorgebbaren Steuerungseungriff, enthält und entsprechend der jeweils angeforderten Fahrfolge Anwahlsignale an die Stabsteuereinrichtung überträgt. Die Erfindung betrifft weiterhin ein Verfahren zur Steuerung der Steuerstäbe.

Eine Regelung der Kraftwerksleistung einer Kernkraftanlage erfolgt in der-Regel über Steuerstäbe, welche in den Reaktorkern der Kernkraftanlage eingefahren bzw. herausgefahren werden. Die Steuerstäbe sind hierzu über den Querschnitt des Kernreaktors verteilt und weisen ein neutronenabsorbierendes Material auf, durch welches eine Kontrollierung der nuklearen Kettenreaktion gewährleistet wird. Durch eine Kontrollierung und Regulierung der nuklearen Kettenreaktion erfolgt eine entsprechende Regulierung der thermischen Leistung der Kernkraftanlage. Um eine möglichst exakte und gleichmäßige Regelung der thermischen Leistung, unter Berücksichtigung der Reaktorsicherheit, insbesondere Vermeidung lokaler Aufheizungen etc., zu erreichen, werden die Steuerstäbe zu Gruppen zusammengefaßt, wie beispielsweise in der US-PS 4,717,528 beschrieben. Die Gruppen werden in mehreren aufeinanderfolgenden, vorab festgelegten oder aktuell bestimmten Schritten um einen vorgegebenen Wert bewegt. Die Zusammenfassung der Steuerstäbe in Gruppen und die Vorgabe der Bewegung der jeweilige Gruppen wird als Fahrfolge bezeichnet. Beispielsweise können von einem Anfahren der Kernkraftanlage, d.h. von dem Beginn der nuklearen Kettenreaktion, bis zum Erreichen der vollen Kraftwerksleistung bis zu über 200 Fahrfolgen durchlaufen werden. Für die Durchführung der Fahrfolgen ist eine Anwahleinrichtung, auch als Steuerstabfahrrechner bezeichnet, vorgesehen, die entsprechende Anwahlsignale an eine Stabsteuereinrichtung überträgt. Bei gleichzeitigem Vorhandensein eines Fahrbefehls, welcher von der Kraftwerksregelung bzw. dem Bedienungspersonal an die Stabsteuereinrichtung übermittelt wird, sowie eines Freigabesignals, werden die Anwahlsignale an einen Antrieb der Steuerstäbe übertragen und die Steuerstäbe entsprechend der Vorgaben der aktuellen Fahrfolge bewegt.

Die US-PS 4,717,528 behandelt ein System zur Steuerung und zum Antrieb von Steuerstäben einer Druckwasser-Kernkraftanlage. Das System weist einen Hauptrechner auf, welcher aus fünf Unterrechnern aufgebaut ist. Der Hauptrechner dient dazu, anhand physikalischer Bedingungen in dem Reaktordruckbehälter der Druckwasser-Kernkraftanlage, wie Abbrand der Brennelemente, lokale Neutronenflußdichte und lokale Leistung, das zum Betrieb der Kernkraftanlage günstigste Verschiebungsmuster der Steuerstäbe zu bestimmen. Dieses günstigste Verschiebungsmuster wird zeitlich jeweils neu bestimmt. Der Hauptrechner ist über ein Bussystem (Control Rod Logic Bus Controller) mit den jeweiligen Antriebsvorrichtungen der Steuerstäbe verbunden. Über das Bussystem wird anhand der durch den Hauptrechner berechneten günstigsten Verteilung der Steuerstäbe ein jeweiliges elektrisches Signal zur Ansteuerung der jeweiligen Antriebsvorrichtung übertragen. Eine jeweilige Antriebsvorrichtung besitzt unterschiedliche elektrische Haltespulen einerseits zum Festhalten und andererseits zum Verschieben der Steuerstäbe, wobei die elektrischen Haltespulen in einem Gehäuse untergebracht sind. Die Antriebsvorrichtung sowie die Übertragung der elektrischen Signale sind jeweils redundant ausführbar. Zur Redundanz und Sicherheit der Signalübertragung ist ein sogenannter Sicherheitsbus vorgesehen.

Eine Anwahleinrichtung zur Steuerung der Steuerstäbe kann neben betrieblichen Funktionen auch eine sicherheitstechnische Bedeutung haben, da sie einerseits als mögliche Ursache von nicht tolerablen Störungen der Leistungsverteilung und des Leistungsniveaus im Reaktorkern bei Fehlfunktionen verantwortlich sein kann und andererseits als System zur Leistungsreduktion bei betrieblichen Störungen (Schnellabschaltsystem) dient. Die betrieblichen Funktionen lassen sich in drei weitgehend unabhängige Aufgabenbereiche unterteilen, nämlich die An- und Abwahl von Steuerstäben gemäß einer vorgebbaren Fahrfolge auf Anforderung der Reaktorregelung und/ oder des Bedienungspersonals. Hierzu gehört ebenfalls die Überwachung der Stabstellung im Hinblick auf Übereinstimmung mit der aktuellen Fahrfolge. Eine weitere betriebliche Funktion kann in einer möglichst lückenlosen Überwachung des eigenen richtigen Funktionierens (Selbstüberwachung) sowie der Funktionsfähigkeit periphärer Einrichtungen, wie Signaleingabe- und Signalausgabevorrichtungen, Meßvorrichtungen zur Bestimmung der Position der Steuerstäbe bestehen. Bei einer Fehlererkennung kann eine automatische Trennung der Anwahleinrichtung, d. h. des Steuerstabfahrrechners, von dem Leistungsregulierungsprozeß erfolgen. Möglicherweise fehlerhafte Anwahlsignale werden somit in der Stabsteuereinrichtung nicht wirksam. Dieses Nichtwirksamwerden der Anwahlsignale bei auftretenden Fehlern wird als Fail-Safe-Verhalten bezeichnet. Als dritte Funktion der Anwahleinrichtung wird häufig eine Protokollierung von Meldungen aus dem Steuerstabantriebssystem, insbesondere eine Protokollierung der Einschießzeiten jedes Stabes bei einer Schnellabschaltung der Kernkraftanlage, insbesondere mit einem Siedewasserreaktor, berücksichtigt. Die Überwachung der Einschießzeiten erfordert die Auswertung einer großen Zahl von Signalen, welche zum Teil auch für die An- und Abwahl von Steuerstäben benötigt werden, so daß diese Überwachungsfunktion von der Anwahleinrichtung mit übernommen werden konnte.

Aufgabe der Erfindung ist es, ein System zur Steuerung der Steuerstäbe anzugeben, bei der die betrieblichen Funktionen durch voneinander getrennte und diversitäre Einrichtungen erfüllt wird, wobei insbesondere eine Überwachung des richtigen Funktionierens einer Anwahleinrichtung weitgehend unabhängig von deren zentraler Prozessoreinheit erfolgen soll.

Erfindungsgemäß wird die Aufgabe durch ein System zur Steuerung von Steuerstäben, die in den Reaktorkern einer Kernkraftanlage ein- und ausfahrbar sind, mit einer Auswahleinrichtung, einer Überwachungseinrichtung und einer Steuerstabeinrichtung dadurch gelöst, daß
a) die Anwahleinrichtung die zur Regelung der Kernkraftanlage definierten und einzeln auswählbaren Fahrfolgen, d. h. Zuordnung und Bewegungsabfolge der Steuerstäbe für jeden vorgegebenen Steuerungseingriff, enthält und mit der Stabsteuereinrichtung zur Übertragung von Anwahlsignalen, die einer jeweils ausgewählten Fahrfolge zugeordnet sind, verbunden ist,
b) die Überwachungseinrichtung unter Berücksichtigung von der jeweiligen Fahrfolge zugeordneten Strukturmerkmalen des Reaktorkerns und der Steuerstäbe, insbesondere Nachbarschaftsbeziehungen der Steuerstäbe, die Anwahlsignale auf Zulässigkeit überprüft und bei Zulässigkeit ein Freigabesignal an die Stabsteuereinrichtung überträgt und
c) die Stabsteuereinrichtung bei Vorhandensein des Freigabesignals eine Verschiebung der Steuerstäbe gemäß den Anwahlsignalen veranlaßt.

Hierdurch ist eine An- und Abwahl von Steuerstäben gemäß einer vorgebbaren oder vorbestimmbaren Fahrfolge auf Anforderung der Reaktorregelung oder des Bedienungspersonals gewährleistet. Zudem werden erst bei Vorliegen des Freigabesignals die Anwahlsignale in der Stabsteuereinrichtung wirksam, so daß ebenfalls ein Fail-Safe-Verhalten gewährleistet. Bei Austausch eines Steuerstabfahrrechners ohne getrennte Überwachungseinrichtung sind keine oder nur in geringem Umfang Änderungen an zugeordneten Systemen, wie Stabsteuereinrichtung und Kraftwerkswarte erforderlich, so daß auch die Bedienung durch das Bedienungspersonal im wesentlichen unverändert bleibt. Der Platzbedarf des erfindungsgemäßen Systems ist gegenüber bisherigen Systemen gleich groß oder sogar geringer, wobei zudem eine hohe Verfügbarkeit gegeben ist. Eine Überwachung der Einschießzeit der Steuerstäbe im Falle einer Schnellabschaltung kann einfach durch eine separate Einrichtung durchgeführt werden. Mit der Erfindung wird auf eine völlig neue und diversitäree Art sichergestellt, daß bei einer Fehlfunktion der Anwahleinrichtung möglicherweise fehlerhafte, sicherheitstechnisch relevante Anwahlsignale in der Stabsteuereinrichtung unwirksam bleiben, somit ein Fail-Safe-Verhalten gewährleistet ist. Ein bisheriger Steuerstabfahrrechner kann im Zuge einer Umrüstung durch eine Anwahleinrichtung, welche im wesentlichen die betriebliche Funktionalität und die wesentlichen sicherheitstechnischen Auslegungsmerkmale des bisherigen Steuerstabfahrrechners, insbesondere eine Selbstüberwachung, enthält, sowie einer dazu diversitären Überwachungseinrichtung ersetzt werden. Die Überwachungseinrichtung überprüft die Anwahlsignale der Anwahleinrichtung auf Übereinstimmung mit einem Überwachungsalgorithmus und den Anforderungen aus dem Leistungsregulierungsprozeß. Sie gibt bei Übereinstimmung ein dynamisches Freigabesignal aus oder blockiert anderenfalls durch Sperren des Freigabesignals das Wirksamwerden der Anwahlsignale in der Stabsteuereinrichtung. Hierbei wird berücksichtigt, daß per Definition als richtige und damit zulässige Stabanwahlsignale solche Anwahlsignale, die auch kurz als Anwahl bezeichnet werden, gelten, die bei einer vorliegenden Anforderung der Kraftwerksregelung bzw. des Bedienungspersonals gemäß der vorgegebenen Fahrfolge ausgeführt werden. Um unzulässige Anwahlen, sogenannte Fehlanwahlen, die sicherheitstechnisch relevant sind, und insbesondere beim Verschieben der Steuerstäbe zu nicht tolerierbaren Belastungen der in dem Reaktorkern enthaltenen Brennelemente führen, sicher zu vermeiden, ist es nicht notwendigerweise erforderlich jede geringfügige Abweichung der Bewegung der Steuerstäbe von der vorgegebenen Fahrfolge zu erkennen. Die Überwachungseinrichtung sollte vielmehr sicherstellen, daß keine sicherheitstechnisch relevanten Fehlanwahlen wirksam werden. Durch die zu der Anwahl diversitären Überwachung wird daher nicht die absolute Übereinstimmung der Anwahl mit der Fahrfolge, sondern vielmehr die Einhaltung von Eigenschaften der Fahrfolge geprüft. Eine Eigenschaft einer realen Fahrfolge liegt in ihrer Struktur, welche wiederum physikalisch sinnvoll sein muß. Die aus der Struktur ableitbaren Strukturmerkmale sind vor allem Nachbarschaftsbeziehungen der angewählten Steuerstäbe, Folgen von Nachbarschaftsbeziehungen sowie Zeitbedingungen. Je mehr Strukturmerkmale in die Überwachung einbezogen werden und je komplexer die Kriterien der Überprüfung sind, um so wirksamer ist die Überwachung. Beim Einlesen einer neuen Fahrfolge in die Anwahleinrichtung kann ein Satz von Strukturmerkmalen der entsprechenden Fahrfolge von der Anwahleinrichtung zu der Überwachungseinrichtung übertragen werden. In der Überwachungseinrichtung findet eine Überprüfung der Anwahlsignale für die Steuerstäbe auf Einhaltung dieser Strukturmerkmale sowie weiterer Merkmale statt. Bei Einhaltung der vorgegebenen Merkmale wird ein dynamisches Freigabesignal, welches beispielsweise zyklisch erzeugt wird, an die Stabsteuereinrichtung übertragen. Bei Erkennung eines Fehlers wird das Freigabesignal gesperrt, was zu einem Blockieren der Anwahlsignale in der Stabsteuereinrichtung führt.

Die Anwahleinrichtung mit den betrieblichen Funktionen eines Steuerstabfahrrechners zur Anwahl von Steuerstäben und die Überwachungseinrichtung wirken zueinander diversitär, da für beide ein unterschiedlicher verfahrenstechnischer Ansatz mit unterschiedlichen Eingangssignalen, Ausgangssignalen und Programmstrukturen besteht. Die Anwahleinrichtung erhält beispielsweise analoge Eingangssignale, die die Stabstellung kennzeichnen, und sie gibt statische Ausgangssignale an die Stabsteuereinrichtung ab, die während der Bewegung der Steuerstäbe bis zu einer vorgegebenen Stabstellung anliegen. Als Vergleichswerte hierzu dienen die vorgegebenen Fahrfolgen. Die Programmstruktur dient einem Vergleich der Eingangssignale mit der vorgegebenen Fahrfolge. Die Überwachungseinrichtung hingegen erhält beispielsweise binäre Eingangssignale, insbesondere Anwahlsignale und/oder Signale der Strukturmerkmale einer Fahrfolge, insbesondere von der Anwahleinrichtung oder der Stabsteuereinrichtung. Als Ausgangssignal wird ein dynamisches, insbesondere zyklisch erzeugtes, Freigabesignal übertragen. Als Vergleichswerte dient die Struktur der Fahrfolge und nicht die Fahrfolge selbst. Die Programmstruktur ist demgemäß auf einen Vergleich der Strukturmerkmale der Fahrfolge ausgelegt. Die diversitäre Überprüfung der Anwahlsignale mittels Überprüfung von Struktureigenschaften der Fahrfolgen, d.h. des Reaktorkerns und der Steuerstäbe, ist über die Ermittlung von Fehlfunktionen der Anwahleinrichtung hinaus auch für die Erkennung der Auswirkungen von Fehlern in der vorgebenen Fahrfolge geeignet.

Eine zusätzliche Diversität kann durch Einsatz unterschiedlicher Betriebssysteme, unterschiedlicher Programmiersprachen, unterschiedlicher Compiler/Assembler, unterschiedlicher Hardware-Systemstrukturen und unterschiedlicher Geräte erfolgen. Hierzu sind insbesondere diversitäre Leittechniksysteme mit unterschiedlichen Hardware- und Software-Komponenten geeignet. Durch die Diversität der Anwahleinrichtung und der Überwachungseinrichtung ist eine hohe sicherheitstechnische Zuverlässigkeit des Systems zur Steuerung der Steuerstäbe gegeben, welche durch Verwendung unterschiedlicher Hardware- und Software-Komponenten für die Anwahleinrichtung und die Überwachungseinrichtung noch weiter erhöht werden kann. Dies gilt insbesondere wenn von der Annahme ausgegangen werden kann, daß bei den Hardware- und Software-Komponenten nur statistische Fehler vorhanden sind bzw. sich systematische Fehler nicht gleichzeitig sondern statistisch auswirken.

Vorzugsweise weist die Anwahleinrichtung, der Steuerstabfahrrechner, und/oder die Überwachungseinrichtung mindestens zwei redundante Prozessoren auf, die jeweils zur Erledigung der selben Aufgabe ausgelegt sind. Hierbei ist nur einer der redundanten Prozessoren aktiv in dem Sinne, daß nur dieser aktive Prozessor (Master-Prozessor) eine vollständige Datenverabeitung gemäß seiner Aufgabe durchführt und das Ergebnis der Datenverarbeitung weitergeleitet wird. Der andere Prozessor (Reserve-Prozessor) ist entweder vollständig inaktiv oder so abgesperrt, daß nur die Signale des aktiven Prozessors weiter verarbeitet werden. Im Falle einer Fehlfunktion des aktiven Prozessors, welche beispielsweise durch eine Selbstüberwachung erkannt wird, wird dieser Prozessor inaktiviert und ein hierzu redundanter Prozessor aktiviert. Dieser übernimmt die geforderte Datenverarbeitung. Dieses redundante Prinzip wird als Master-Reserve-Prinzip bezeichnet, wobei ein Master-Prozessor aktiv ist und ein Reserve-Prozessor als Ersatz zur Verfügung steht, wenn der Master-Prozessor fehlerhaft funktioniert oder ganz ausfällt. Das Master-Reserve-Prinzip für die Anwahleinrichtung und/oder die Überwachungseinrichtung ist dann besonders vorteilhaft, wenn die entsprechende Einrichtung als einkanaliges System mit einem Eingangskanal und einem Ausgangskanal ausgeführt ist. Es hat sich bei den bisher verwendeten Anwahleinrichtungen, den sogenannten Steuerstabfahrrechnern gezeigt, daß für deren Verfügbarkeit nicht die Zuverlässigkeit der Hardware oder Software maßgebend ist, sondern die Empfindlichkeit der Überwachungsalgorithmen und die Zuverlässigkeit der in die Überwachung einbezogenen periphären Vorrichtungen, insbesondere einer Meßvorrichtung für die Steuerstabstellung sowie die Steuerstabstellantriebe einschließlich der dazugehörenden elektrischen und leittechnischen Komponenten. Vorzugsweise besteht daher eine redundante Ausführung der Prozessoren aus einem Master-Prozessor und einem Reserve-Prozessor. Eine Erhöhung der Verfügbarkeit kann durch den Einsatz zuverlässigerer Peripheriegeräte sowie einer redundanten Ausführung der periphären Vorrichtungen erreicht werden. Das Einlesen der die Stabstellung charakterisierenden Signale erfolgt beispielsweise über Multiplexer, Ausgabe/Eingabe-Baugruppen oder Kopplung an ein anlagenseitig vorhandenes Datenübertragungs-System.

Die auf ein Verfahren zur Steuerung von Steuerstäben, die in den Reaktorkern einer Kernkraftanlage ein- und ausfahrbar sind, gerichtete Aufgabe wird dadurch gelöst, daß
a) Bewegungsabfolge und Zuordnung der Steuerstäbe in Fahrfolgen zusammengefaßt und in einer Anwahleinrichtung gespeichert und zur Auswahl verfügbar sind und einer ausgewählten Fahrfolge zugeordnete Anwahlsignale von der Anwahleinrichtung zu einer Stabsteuereinrichtung übertragen werden,
b) einer zu der Anwahleinrichtung diversitären Überwachungseinrichtung die Anwahlsignale ebenfalls übertragen und anhand von der Fahrfolge zugeordneten Strukturmerkmalen auf Zulässigkeit überprüft werden,
c) bei Zulässigkeit der Anwahlsignale ein Freigabesignal an die Stabsteuereinrichtung übertragen wird und
d) bei gleichzeitigem Anliegen der Anwahlsignale und des Freigabesignals an der Stabsteuereinrichtung eine Verschiebung der Steuerstäbe gemäß den Anwahlsignalen durchgeführt wird.

Durch die Diversität des Anwahlverfahrens und des Überwachungsverfahrens wird eine hohe sicherheitstechnische Zuverlässigkeit gewährleistet und eine Überwachung unabhängig von der zentralen Prozessoreinheit der Anwahleinrichtung ermöglicht. Das Verfahren kann einfach auch in bereits bestehenden Kernkraftanlagen, vorzugsweise mit einem Siedewasserreaktor, angewendet werden.

Anhand der Zeichnung wird das System zur Steuerung der Steuerstäbe einer Kernkraftanlage, insbesondere einer Siedewasser-Kernkraftanlage, sowie das Verfahren zur Steuerung der Steuerstäbe anhand von Ausführungsbeispielen näher beschrieben. Es zeigen:
- FIG 1: ein System zur Steuerung der Steuerstäbe in schematischer Darstellung mit einer Anwahleinrichtung und einer dazu diversitären Überwachungseinrichtung,
- FIG 2: ein System zur Steuerung der Steuerstäbe gemäß dem Stand der Technik und
- FIG 3: ein System zur Steuerung der Steuerstäbe mit einer redundant ausgeführten Anwahleinrichtung und einer redundant ausgeführten Überwachungseinrichtung

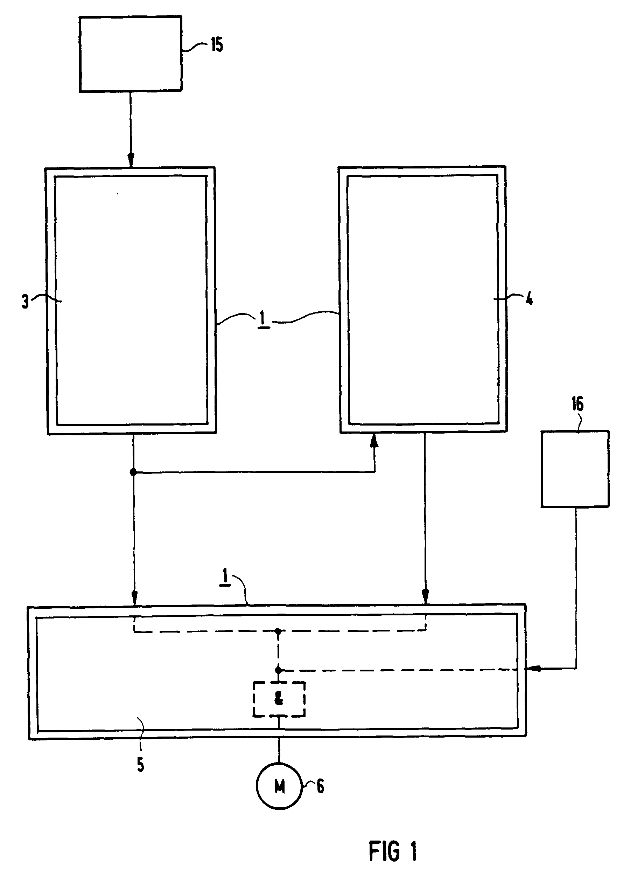

Das in FIG 1 schematisch dargestellte System 1 zur Steuerung von Steuerstäben einer Kernkraftanlage weist eine Anwahleinrichtung 3, eine Überwachungseinrichtung 4 und eine Stabsteuereinrichtung 5 auf. Die Anwahleinrichtung 3 und die Überwachungseinrichtung 4 sind jeweils mit der Stabsteuereinrichtung 5 sowie unmittelbar miteinander verbunden. Die Anwahleinrichtung 3 ist weiterhin mit einer Meßeinrichtung 15 zur Bestimmung der Steuerstabstellung verbunden. Die Stabsteuereinrichtung 5 steht weiterhin mit dem Reaktor-Regelsystem 16 und/oder einer hier nicht dargestellten Eingabevorrichtung für das Bedienungspersonal sowie einer Stabstelleinrichtung 6 zum Verschieben der Steuerstäbe in Verbindung. Von dem Reaktor-Regelsystem 16 erhält die Stabsteuereinrichtung 5 je nach gewünschter Leistungsänderung der Kernkraftanlage einen entsprechenden Fahrbefehl zum Verfahren der Steuerstabe. Zur Durchführung dieses Befehles wird von der Anwahleinrichtung 3 eine entsprechende Fahrfolge, d.h. eine Gruppe von Steuerstäben mit einem zugehörigen Wert der Positionsveränderung der Steuerstäbe, an die Stabsteuereinrichtung 5 in Form entsprechender statischer Anwahlsignale gegeben. Diese Anwahlsignale liegen an der Stabsteuereinrichtung 5 bis zum Erreichen der vorgegebenen Steuerstabstellung der ausgewählten Gruppe von Steuerstäben an. Zur Ermittlung, inwieweit die ausgewählten Steuerstäbe bereits bewegt wurden, wird der Anwahleinrichtung 3 über die Meßeinrichtung 15 zur Steuerstabstellung ein entsprechendes, die Position der Steuerstäbe kennzeichnendes Signal zugeleitetet. Zur Sicherstellung, daß entsprechend des Fahrbefehles und der zugeordneten Fahrfolge zulässige Anwahlsignale an die Stabsteuereinrichtung 5 abgegeben und dort wirksam werden, wird von der Anwahleinrichtung 3 ein Satz von Strukturmerkmalen der Fahrfolge an die Überwachungseinrichtung 4 übertragen. Anhand des Satzes der Strukturmerkmale, welche insbesondere Nachbarschaftseigenschaften der ausgewählten Steuerstäbe, zeitliche Folgen von Nachbarschaftsbeziehungen sowie Zeitbedingungen enthält, wird die Zulässigkeit der Anwahlsignale überprüft. Falls die Anwahlsignale als zulässig bewertet werden, wird von der Überwachungseinrichtung 4 ein dynamisches Freigabesignal an die Stabsteuereinrichtung 5 übertragen. Werden die Anwahlsignale hingegen als unzulässig bewertet, so wird das Freigabesignal blockiert und dadurch gewährleistet, daß die möglicherweise fehlerhaften Anwahlsignale von der Stabsteuereinrichtung 5 nicht auf die Stabstelleinrichtung 6 übertragen werden. Hierdurch wird das sogenannte Fail-Safe-Prinzip eingehalten, bei dem im Falle des Auftretens von Fehlern die Kernkraftanlage in einem sicheren Zustand verbleibt. Aufgrund der verfahrenstechnischen, gerätetechnischen und programmtechnischen Diversität zwischen der Anwahleinrichtung 3 und der Überwachungseinrichtung 4 sowie der Diversität der in den Einrichtungen 3,4 erzeugten Signalen hat das System 1 eine hohe sicherheitstechnische Zuverlässigkeit.

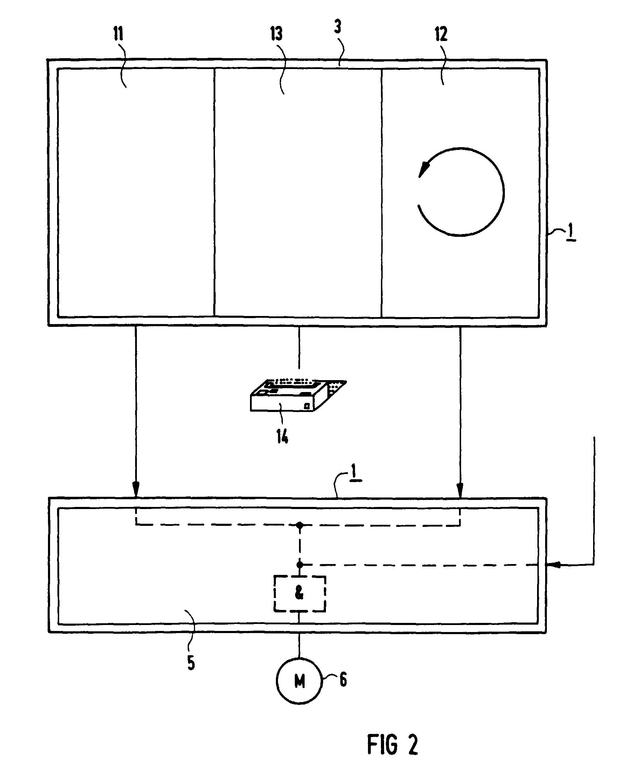

In FIG 2 ist ein bisheriges System 1 zur Steuerung der Steuerstäbe einer Kernkraftanlage dargestellt. Von einer Anwahleinrichtung 3, die auch als Steuerstabfahrrechner bezeichnet wird, werden sowohl die Anwahlsignale der geforderten Fahrfolge sowie ein Freigabesignal an eine Stabsteuereinrichtung 5 übertragen. Der Steuerstabfahrrechner 3 weist ein Fahrfolgen-Modul 11, ein Selbstüberwachungs-Modul 12 sowie ein Schnellabschaltüberwachungs-Modul 13 auf. Das Selbstüberwachungs-Modul 12 führt einen Funktionstest der zentralen Prozessoreinheit des Fahrfolgen-Moduls 11 aus. Das Selbstüberwachungs-Modul 12 ist daher ganz speziell auf diese zentrale Prozessoreinheit ausgelegt ist. Bei Verwendung modernster Prozessoreinheiten wären hierzu extrem aufwendige und kostenintensive Sonderentwicklungen notwendig, wobei ein allgemeingültiger Nachweis der Wirksamkeit des Selbstüberwachungs-Moduls 12 aufgrund der Komplexität moderner Prozessoreinheiten möglicherweise nicht zu führen wäre. Durch das Selbstüberwachungs-Modul 12 werden die komplette Fahrfolge und die dazugehörigen Anwahlsignale auf vollständige Übereinstimmung überprüft. Mit der Erfindung hingegen wird eine solche aufwendige vollständige Überprüfung vermieden, in dem anhand von Strukturmerkmalen der jeweiligen Fahrfolge die Anwahlsignale überprüft und solche Anwahlsignale mit Sicherheit erfaßt werden, die unzulässig und von sicherheitstechnischer Relevanz sind.

Die Anwahleinrichtung 3 gemäß FIG 2 verfügt zudem über ein Schnellabschaltüberwachungs-Modul 13, welches an eine Protokollierungs-Einrichtung 14, insbesondere einen Drucker, angeschlossen ist, mit der im Falle einer Schnellabschaltung die Einschießzeiten der Steuerstäbe in den Reaktorkern sowie weitere in diesem Zusammenhang anfallende Signale protokolliert werden.

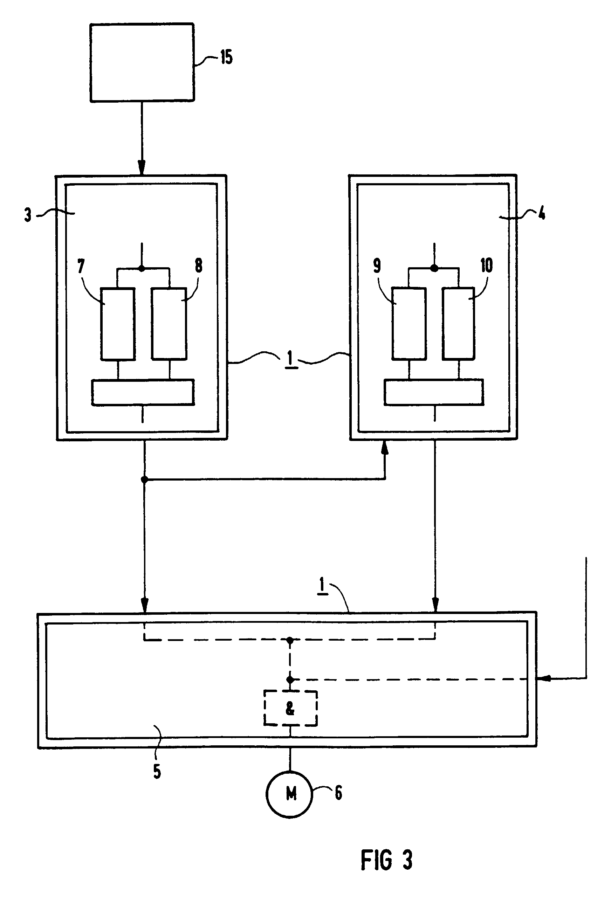

In FIG 3 ist ein zu FIG 1 analoges System 1 zur Steuerung der Steuerstäbe angegeben. Gleiche Bezugszeichen beschreiben gleiche Objekte. Zusätzlich zu dem in FIG 1 dargestellten System 1 enthält sowohl die Anwahleinrichtung 3 als auch die Überwachungseinrichtung 4 jeweils zwei zueinander redundante Prozessoren 7,8 bzw. 9,10. An den Prozessoren 7,8 der Anwahleinrichtung 3 liegen jeweils die gleichen Eingangssignale an, wobei allerdings im Normalfall nur die Ausgangssignale des Master-Prozessors 7 an die Stabsteuereinrichtung 5 bzw. die Überwachungseinrichtung 4 übertragen werden. Der Reserve-Prozessor 8 steht im Normalfall in einem Stand-by-Betrieb. Bei einer Fehlfunktion des Master-Prozessors 7, welche beispielsweise über eine programmtechnisch realisierte Selbstüberwachung erkannt wird, wird der Master-Prozessor 7 deaktiviert und der Reserve-Prozessor 8 voll aktiviert, so daß die entsprechenden Ausgangssignale nunmehr von dem Reserve-Prozessor 8 an die Stabsteuereinrichtung 5 bzw. die Überwachungseinrichtung 4 übertragen werden. Der Master-Prozessor 9 und der Reserve-Prozessor 10 der Überwachungseinrichtung 4 sind analog zu den Prozessoren 7,8 der Anwahleinrichtung 3 redundant ausgelegt. Durch die Diversität der Überwachungseinrichtung 4 und der Anwahleinrichtung 3 sowie deren redundanter Ausführung ist selbst bei einer einkanaligen Ein- und/oder Ausgabe der Anwahleinrichtung 3 und der Überwachungseinrichtung 4 eine hohe Zuverlässigkeit des Systems 1 gewährleistet.

Die Erfindung zeichnet sich durch ein System zur Steuerung der Steuerstäbe einer Leichtwasser-Kernkraftanlage, insbesondere mit einem Siedewasserreaktor, mit einer Anwahleinrichtung aus, die die Steuerstäbe anwählt und neben der bisherigen betrieblichen Funktionalität auch wesentliche Merkmale der sicherheitstechnischen Auslegung bisheriger Anwahleinrichtungen, sogenannter Steuerstabfahrrechner, aufweist. Das System hat zudem eine Überwachungseinrichtung, die nach einem zu der Anwahleinrichtung diversitären Algorithmus die Anwahlsignale, welche von der Anwahleinrichtung an eine Stabsteuereinrichtung übertragen werden, überwacht und das Wirksamwerden von Fehlanwahlen verhindert. Durch Verwendung zueinander diversitären Leittechniksysteme sowie einer redundanten Ausführung der Anwahleinrichtung und der Überwachungseinrichtung mittels jeweils zweier unabhängiger Prozessoren kann die Zuverlässigkeit des Systems weiter erhöht werden. Gegenüber bisheriger Systeme wird bei dem erfindungsgemäßen System eine Überwachung der Anwahlsignale anhand von Strukturmerkmalen der Bewegungsabfolge und der Zuordnung der Steuerstäbe bestimmt, wodurch eine einfache und schnelle Überwachung sowie eine von der zentralen Prozessoreinheit der Anwahleinrichtung entkoppelte und diversitäre Überwachung gewährleistet ist.

## Patentansprüche

1. System (1) zur Steuerung von Steuerstäben, die in den Reaktorkern einer Kernkraftanlage einfahrbar und aus dem Reaktorkern ausfahrbar sind, mit einer Anwahleinrichtung (3), einer Überwachungseinrichtung (4) und einer Stabsteuereinrichtung (5), wobei
a) die Anwahleinrichtung (3) die zur Regelung der Kernkraftanlage definierten und einzeln auswählbaren Fahrfolgen, d.h. Zuordnung und Bewegungsabfolge der Steuerstäbe für jeden vorgegebenen Steuerungseingriff, enthält und mit der Stabsteuereinrichtung (5) zur Übertragung von Anwahlsignalen, die einer jeweils ausgewählten Fahrfolge zugeordnet sind, verbunden ist,
b) die Überwachungseinrichtung (4) unter Berücksichtigung von der jeweiligen Fahrfolge zugeordneten Strukturmerkmalen des Reaktorkerns und der Steuerstäbe, insbesondere Nachbarschaftsbeziehungen der Steuerstäbe, die Anwahlsignale auf Zulässigkeit überprüft und bei Zulässigkeit ein Freigabesignal an die Stabsteuereinrichtung (5) überträgt und
c) die Stabsteuereinrichtung (5) bei Vorhandensein des Freigabesignals eine Verschiebung der Steuerstäbe gemäß den Anwahlsignalen veranlaßt.

2. System (1) nach Anspruch 1, bei der die Anwahleinrichtung (3) mindestens zwei unabhängige und redundante erste Prozessoren (7,8) zur Anwahl der Fahrfolgen enthält, die so miteinander verbunden sind, daß jeweils nur einer der ersten Prozessoren (7,8) ein wirksames Ausgangssignal liefert.

3. System nach Anspruch 2, wobei einer der ersten Prozessoren (7,8) ein erster Master-Prozessor (7) ist, dessen Ausgangssignal Vorrang hat, und bei einer Fehlfunktion des ersten Master-Prozessors (7) ein erster Reserve-Prozessor (8) aktivierbar ist, so daß das Ausgangssignal des ersten Reserve-Prozessors (8) Vorrang hat.

4. System (1) nach einem der vorhergehenden Ansprüche, bei der die Überwachungseinrichtung (4) mindestens zwei unabhängige und redundante zweite Prozessoren (9,10) zur Überprüfung der Zulässigkeit der Anwahlsignale der aktuellen Fahrfolgen enthält, die so miteinander verbunden sind, daß jeweils nur einer der zweiten Prozessoren (9,10) ein wirksames Ausgangssignal liefert.

5. System nach Anspruch 4, wobei einer der zweiten Prozessoren (9,10) ein zweiter Master-Prozessor (9) ist, dessen Ausgangssignal Vorrang hat, und bei einer Fehlfunktion des zweiten Master-Prozessors (9) ein zweiter Reserve-Prozessor (10) aktivierbar ist, so daß das Ausgangssignal des zweiten Reserve-Prozessors (10) Vorrang hat.

6. Verfahren zur Steuerung von Steuerstäben, die in den Reaktorkern einer Kernkraftanlage ein- und aus dem Reaktorkern ausfahrbar sind, wobei
a) Bewegungsabfolge und Zuordnung der Steuerstäbe in Fahrfolgen zusammengefaßt und in einer Anwahleinrichtung (3) gespeichert und zur Auswahl verfügbar sind und einer ausgewählten Fahrfolge zugeordnete Anwahlsignale von der Anwahleinrichtung (3) zu einer Stabsteuereinrichtung (5) übertragen werden,
b) einer zu der Anwahleinrichtung (3) diversitären Überwachungseinrichtung (4) die Anwahlsignale ebenfalls übertragen und anhand von der Fahrfolge zugeordneten Strukturmerkmalen auf Zulässigkeit überprüft werden,
c) bei Zulässigkeit der Anwahlsignale ein Freigabesignal an die Stabsteuereinrichtung (5) übertragen wird und
d) bei gleichzeitigem Anliegen der Anwahlsignale und des Freigabesignals an der Stabsteuereinrichtung (5) eine Verschiebung der Steuerstäbe gemäß den Anwahlsignalen durchgeführt wird.

## Claims

1. System (1) for controlling control rods which can be moved into the reactor core of a nuclear power plant and can be moved out of the reactor core, with a selector device (3), a monitor device (4) and a rod control device (5),
a) the selector device (3) containing the travel sequences which are individually selectable and are defined for regulating the nuclear power plant, i.e. allocation and movement sequences of the control rods for each predetermined control operation, and being connected to the rod control device (5) for transmitting selector signals which are allocated to a respectively selected travel sequence,
b) while taking into account the structural features of the reactor core and the control rods, which are allocated to the respective travel sequence, in particular proximity relationships of the control rods, the monitor device (4) checking the selector signals for acceptability and, if acceptable, transmitting an enable signal to the rod control device (5), and
c) in the presence of the enable signal, the rod control device (5) inducing a displacement of the control rods according to the selector signals.

2. System (1) according to Claim 1, in which the selector device (3) contains at least two independent and redundant first processors (7, 8) for selecting the travel sequences, which are connected together in such a way that only one of the first processors (7, 8) in each case delivers an effective output signal.

3. System according to Claim 2, in which one of the first processors (7, 8) is a first master processor (7) whose output signal has priority, and, if the first master processor (7) malfunctions, a first reserve processor (8) can be activated so that the output signal of the first reserve processor (8) has priority.

4. System (1) according to one of the preceding claims, in which the monitor device (4) contains at least two independent and redundant second processors (9, 10) for checking the acceptability of the selector signals of the current travel sequences, which are connected together in such a way that only one of the second processors (9, 10) in each case delivers an effective output signal.

5. System according to Claim 4, in which one of the second processors (9, 10) is a second master processor (9) whose output signal has priority, and, if the second master processor (9) malfunctions, a reserve second processor (10) can be activated so that the output signal of the second reserve processor (10) has priority.

6. Method for controlling control rods which can be moved into the reactor core of a nuclear power plant and can be moved out of the reactor core,
a) the movement sequences and allocation of the control rods being combined in travel sequences and stored in a selector device (3) and being available for selection, and selector signals allocated to a selected travel sequence being transmitted by the selector device (3) to a rod control device (5),
b) the selector signals likewise being transmitted to a monitor device (4) separate from the selector device (3), and being checked for acceptability with the aid of structural features allocated to the travel sequence,
c) an enable signal being transmitted to the rod control device (5) if the selector signals are acceptable, and
d) a displacement of the control rods being executed according to the selector signals if the selector signals and the enable signal are simultaneously applied to the rod control device (5).

## Revendications

1. Système (1) de commande de barres de commande pouvant être introduites dans le coeur du réacteur d'une centrale nucléaire et ressorties du coeur du réacteur, comprenant un dispositif de sélection (3), un dispositif de surveillance (4) et un dispositif (5) de commande de barres. parmi lesquels
a) le dispositif de sélection (3) contient les séquences de marche définies pour la régulation de la centrale nucléaire et pouvant être individuellement sélectionnées, c'est-à-dire l'affectation et la succession des mouvements des barres de commande pour chaque intervention de commande prescrite, et il est relié au dispositif (5) de commande de barres afin de lui transmettre des signaux sélectifs qui sont associés à la séquence de marche respectivement sélectionnée,
b) le dispositif de surveillance (4) contrôle l'admissibilité des signaux sélectifs en tenant compte de caractéristiques structurelles du coeur du réacteur et des barres de commande qui sont associées à la séquence de marche respective, notamment des relations de voisinage des barres de commande et, en cas d'admissibilité, transmet un signal d'autorisation au dispositif (5) de commande de barres et
c) le dispositif (5) de commande de barres, en présence du signal d'autorisation, provoque un déplacement des barres de commande conformément aux signaux sélectifs.

2. Système (1) selon la revendication 1, dans lequel le dispositif de sélection (3) comprend au moins deux premiers processeurs (7. 8) indépendants et redondants pour la sélection des séquences de marche, processeurs qui sont reliés entre eux de telle sorte qu'un seul des premiers processeurs (7, 8) délivre chaque fois un signal de sortie actif.

3. Système selon la revendication 2, un des premiers processeurs (7, 8) étant un premier processeur maître (7) dont le signal de sortie est prioritaire, et un premier processeur de réserve (8) pouvant être activé en cas de défaillance de fonctionnement du premier processeur maître (7), de sorte que le signal de sortie du premier processeur de réserve (8) est alors prioritaire.

4. Système (1) selon une des revendications précédentes. dans lequel le dispositif de surveillance (4) comprend au moins deux seconds processeurs (9, 10) indépendants et redondants pour le contrôle de l'admissibilité des signaux sélectifs des séquences de marche actuelles processeurs qui sont reliés entre eux de telle sorte qu'un seul des seconds processeurs (9, 10) délivre chaque fois un signal de sortie actif.

5. Système selon la revendication 4. un des seconds processeurs (9, 10) étant un second processeur maître (9) dont le signal ce sortie est prioritaire, et un second processeur de réserve (10) pouvant être activé en cas de défaillance de fonctionnement du second processeur maître (9), de sorte que le signal de sortie du second processeur de réserve (10) est alors prioritaire.

6. Procédé de commande de barres de commande qui peuvent être introduites dans le coeur du réacteur d'une centrale nucléaire et ressorties du coeur du réacteur, selon lequel
a) la succession des mouvements et l'affectation des barres de commande sont réunies en séquences de marche qui sont mémorisées dans un dispositif de sélection (3) et disponibles pour être sélectionnées, et des signaux sélectifs associés à une séquence de marche sélectionnée sont transmis par le dispositif de sélection (3) à un dispositif (5) de commande de barres,
b) les signaux sélectifs sont également transmis à un dispositif de surveillance (4), différencié par rapport au dispositif de sélection (3). où leur admissibilité est contrôlée à l'aide de caractéristiques structurelles associées à la séquence de marche,
c) en cas d'admissibilité des signaux sélectifs, un signal d'autorisation est transmis au dispositif (5) de commande de barres et
d) si le dispositif (5) de commande de barres reçoit à la fois les signaux sélectifs et le signal d'autorisation, un déplacement des barres de commande est effectué conformément aux signaux sélectifs.
